# EUROPÄISCHE PATENTANMELDUNG

(11) **EP 2 503 274 A2**
(43) Veröffentlichungstag der Anmeldung: **26.09.2012**
(21) Anmeldenummer: 12159578.9
(22) Anmeldetag: 15.03.2012
(51) Int. Cl.: F27D 27/00, B05C 1/00, B27G 11/02, C09J 5/06

(54) **Heißleimschmelzvorrichtung**

(30) Priorität: 24.03.2011 DE 102011015047
(71) Anmelder: HAUNI Maschinenbau AG, 21033 Hamburg (DE)
(72) Erfinder: Zeuner, Dirk, 21493 Schwarzenbek (DE); Masch, Simon, 99958 Tonna (DE); Meyer, Ralf, 29581 Gerdau / Bohlsen (DE)
(74) Vertreter: Müller Verweyen

(57) **Zusammenfassung**

Die Erfindung betrifft eine Heißleimschmelzvorrichtung (1) mit
-einem Heißleimschmelzbehälter (4) zur Aufnahme von Heißleim, welcher zur Verklebung von Filterpapier in Produkten der Tabak verarbeitenden Industrie, insbesondere in Filtern, vorgesehen ist, und
-einer den Heißleim in dem Heißleimschmelzbehälter (4) erhitzenden Heizeinrichtung (7), wobei
-die Heizeinrichtung (7) in den Heißleimschmelzbehälter (4) hineinragt, und
-die Heizeinrichtung (7) selbst oder ein Funktionselement der Heizeinrichtung (7) mittels einer Antriebseinrichtung (8) zu einer den Heißleim durchmischenden Bewegung antreibbar ist.

## Beschreibung

Die Erfindung betrifft eine Heißleimschmelzvorrichtung mit den Merkmalen des Oberbegriffs von Anspruch 1.

Heißleim (auch Hotmelt genannt) wird in Produkten der Tabak verarbeitenden Industrie, insbesondere in Filtern grundsätzlich dazu verwendet, das Filterpapier zur Fixierung der Produkte an den Rändern aneinander zu verkleben, wodurch der Filter in sich und zu dem Tabakstrang fixiert wird.

Heißleimschmelzvorrichtungen der gattungsgemäßen Art werden dazu verwendet, den Heißleim, welcher zum Verkleben auf das Filterpapier der Produkte aufgetragen wird, in einem vorbereitenden Verarbeitungsprozess aus festem Granulat aufzuschmelzen. Die Heißleimschmelzvorrichtung umfasst unter anderem einen Heißleimschmelzbehälter mit einer den Heißleimschmelzbehälter umfassenden Heizeinrichtung. Der Heißleimgrundwerkstoff wird als Granulat in den Heißleimschmelzbehälter eingefüllt und durch die Heizeinrichtung von außen durch die Wandung des Heißleimschmelzbehälters erhitzt und aufgeschmolzen. Der aufgeschmolzene Heißleim wird aus der Heißleimschmelzvorrichtung mittels einer Fördereinrichtung einer Auftragsvorrichtung zugeführt, in der der Heißleim über eine Düse in flüssigem Zustand auf das Filterpapier aufgetragen wird. Der Heißleim selbst ist ein hydrophober Schmelzklebstoff, der bei niedrigen Temperaturen (Raumtemperatur 20 Grad Celsius) fest und nicht klebend ist und aus thermoplastischen Polymeren besteht.

Aufgrund der von der Heizeinrichtung erzeugten und durch die Wandung des Heißleimschmelzbehälters von außen zugeführten Wärme schmilzt das Granulat oder die erkaltete von einem vorangegangenen Verarbeitungsprozess noch übrig gebliebene Heißleimmasse beim Anfahren der Heißleimschmelzvorrichtung von außen nach innen auf, wobei die Aufheizphase bis zum Aufschmelzen einer für den Betrieb der gesamten Anlage ausreichenden Menge von Heißleim bis zu 30 Minuten dauern kann. Dabei ist es von Nachteil, dass der Heißleim selbst eine sehr geringe Wärmeleitfähigkeit aufweist, also praktisch als Isolator angesehen werden kann, und es dadurch verhältnismäßig lange dauert, bis der Heißleim auch in der Mitte des Schmelztopfes aufschmilzt. Infolgedessen ist es nicht zu vermeiden, dass der Heißleim unter ungünstigen Umständen in der Mitte des Schmelztopfes nicht vollständig aufgeschmolzen wird und stattdessen auch nach längerem Betrieb der Heißleimschmelzvorrichtung in der Mitte der Heißleimmasse noch zu einem festen Klumpen verklebt ist.

Für den Fall, dass der Heißleim wiederholt aufgeschmolzen wird und dadurch zu lange thermisch beansprucht wird, besteht außerdem die Gefahr, dass der Heißleim "crackt", dass heißt die Polymere des Heißleims zersetzen sich, wodurch Ablagerungen an der beheizten Oberfläche der Heißleimschmelze entstehen. Diese Ablagerungen wirken isolierend, so dass das Aufschmelzen weiter verzögert wird. Außerdem kann der Heißleim durch die Ablagerungen optisch verfärbt werden.

Außerdem kann die Heizleistung der Heizeinrichtung grundsätzlich nicht beliebig hoch gewählt werden, da der Heißleim in diesem Fall nicht homogen aufgeschmolzen wird, und der Heißleim in der an der Wandung des Heißleimschmelzbehälters angrenzenden Randzone übermäßig stark erhitzt wird und dadurch ebenfalls "cracken" kann. Um das "cracken" zu verhindern, sollte der Heißleim in der Heißleimschmelzvorrichtung in einem Temperaturbereich zwischen 120 und 140 Grad Celsius aufgeschmolzen werden.

Der Schmelzvorgang des Granulats beginnt je nach Leimsorte bei 27 - 40 Grad Celsius und endet bei einer Temperatur von 75 - 110 Grad Celsius. Der Heißleim wird als Granulat mit einer bestimmten Schüttgutdichte in den Heißleimschmelzbehälter eingefüllt. Die Granulatteilchen des Heißleims schmelzen in einer ersten Phase des Aufschmelzens an den Oberflächen zusammen, so dass sich eine Vielzahl von durch die Form des Granulats bedingten Lufteinschlüssen zwischen den Granulatteilchen bilden, welche unter ungünstigen Umständen in der Heißleimschmelze verbleiben können. Der aufgeschmolzene Heißleim ist eine zähe Masse mit einer Viskosität ähnlich der von Honig, wodurch sich die Lufteinschlüsse in der Heißleimschmelze grundsätzlich nur sehr langsam bewegen können. Da Luft ebenfalls einen sehr geringen Wärmeleitkoeffizienten aufweist, wird der Aufschmelzvorgang durch die Lufteinschlüsse weiter verlangsamt.

Ferner muss der Heißleimschmelzbehälter zur Aufnahme des Granulats ein bestimmtes Volumen aufweisen, welches in bisher verwendeten Heißleimschmelzvorrichtungen ca. 9 1 beträgt, damit die Befüllungsintervalle des Heißleimschmelzbehälters nicht zu kurz sind. Bei einem Füllvolumen von 9 1 muss der Heißleimschmelzbehälter je nach der Verwendung der Einrichtung in einer Einstrang- oder Mehrstrangmaschine und der Verwendung von Standard- oder Multifiltern alle 20 Minuten bis jede Stunde manuell mit Granulat aufgefüllt werden.

Aufgabe der Erfindung ist es daher, eine Heißleimschmelzvorrichtung bereitzustellen, welche ein Aufschmelzen des Heißleims in einer verkürzten Aufheizphase ohne Qualitätsnachteile für den aufgeschmolzenen Heißleim ermöglicht.

Zur Lösung der Aufgabe wird eine Heißleimschmelzvorrichtung mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass die Heizeinrichtung in den Heißleimschmelzbehälter hineinragt, und die Heizeinrichtung selbst oder ein Funktionselement der Heizeinrichtung zu einer den Heißleim durchmischenden Bewegung antreibbar ist.

Durch die vorgeschlagene Heißleimschmelzvorrichtung kann das Aufschmelzen des Heißleimes gleich durch mehrere Effekte verbessert werden, die in der Gesamtheit zu einem verkürzten und homogeneren Aufschmelzen des Granulats oder der festen Heißleimmasse führen. Erstens wird das Granulat oder die feste Heißleimmasse durch die Heizvorrichtung von der Mitte des Heißleimschmelzbehälters her erhitzt, so dass die zum Aufschmelzen des Heißleims zur Verfügung stehende wärmemenge unmittelbar und bestmöglich auf den Heißleim übertragen wird, ohne dass die wärmemenge durch die Wandung des Heißleimschmelzbehälters hindurchgeleitet werden muss. Ein weiterer Vorteil der vorgeschlagenen Ausbildung der Heizeinrichtung ist darin zu sehen, dass diese zu einer den Heißleim und/oder das Granulat durchmischenden Bewegung antreibbar ist, so dass die eingebrachte wärmemenge in dem Heißleim zusätzlich verteilt wird und keine Zonen mit punktuellen Temperaturspitzen in dem Heißleim entstehen können. Ein weiterer durch die Erfindung geschaffener Vorteil ist darin zu sehen, dass der Heißleimgrundwerkstoff ein strukturviskoses Verhalten aufweist, und die durch die Bewegung der Heizeinrichtung erzeugten Scherkräfte in dem Heißleim bzw. in der Masse aus Granulat zusätzlich zu einer Verringerung der Viskosität der Heißleimmasse führen und dadurch das Aufschmelzen des Heißleims begünstigen. Ferner können die in dem Heißleim vorhandenen Lufteinschlüsse durch die Bewegung der Heizeinrichtung aus der Heißleimmasse herausgetrieben werden, wodurch der Aufschmelzvorgang indirekt weiter beschleunigt werden kann. Sofern außerhalb der Wandung oder in der Wandung des Heißleimschmelzbehälters zusätzlich eine zweite Heizeinrichtung vorgesehen ist, kann die zum Aufschmelzen des Heißleims zur Verfügung stehende wärmemenge außerdem wesentlich erhöht werden, ohne dass dadurch die Temperatur zum Aufschmelzen des Heißleims erhöht werden muss. Vielmehr kann die größere wärmemenge durch die zweite Heizeinrichtung gleichmäßiger von verschiedenen Seiten in den aufzuschmelzenden Heißleim eingebracht werden, so dass die größere wärmemenge sogar auf einem geringeren Temperaturniveau eingebracht werden kann, ohne dass die gemittelte Temperatur in der Heißleimmasse dadurch sinkt. Sofern ein geringeres Temperaturniveau für die zweite und die erste Heizeinrichtung gewählt wird, kann der Heißleim auch bei gleicher wärmemenge auf einem gleichmäßigeren und niedrigeren Temperaturniveau aufgeschmolzen werden, wodurch die Zeit zum Abkühlen des Heißleims nach dem Auftragen auf das Filterpapier außerdem verkürzt werden kann. Indirekt könnte dadurch eine im weiteren Verarbeitungsprozess der Anlage vorgesehene Kühlstrecke verkürzt werden.

Weiter wird vorgeschlagen, dass die Bewegung eine Rotationsbewegung ist. Die Rotationsbewegung ist insofern vorteilhaft, da sie eine größtmögliche und kontinuierliche Durchmischung der Heißleimmasse ermöglicht. Ferner kann zum Antrieb der Heizeinrichtung ein kostengünstiger Elektromotor verwendet werden, dessen rotatorische Antriebsbewegung direkt oder über ein Getriebe auf die Heizeinrichtung selbst oder ein Funktionselement der Heizeinrichtung übertragen werden kann.

Ferner kann die Heizeinrichtung in dem in den Heißleimschmelzbehälter ragenden Abschnitt eine gitterartige Struktur aufweisen. Durch die Gitterstruktur kann einerseits die zur Übertragung der Wärme zur Verfügung stehende Oberfläche der zweiten Heizeinrichtung vergrößert werden, und andererseits der Effekt der Durchmischung der Heißleimmasse vergrößert werden. Außerdem bildet die Gitterstruktur eine Vielzahl von Scherkanten, welche auf die noch festen noch nicht aufgeschmolzenen Heißleimbrocken bzw. die noch sehr zähe Heißleimmasse entsprechende Scherkräfte ausüben, die wiederum den Aufschmelzvorgang des Heißleims begünstigen.

Eine besonders bevorzugte Ausführungsform der gitterartigen Struktur kann dadurch verwirklicht werden, indem diese durch eine Mehrzahl von parallel ausgerichteten Wärmeleitern gebildet ist. Durch die parallel gerichteten Wärmeleiter kann eine besonders große Oberfläche der zweiten Heizeinrichtung bereitgestellt werden, über die eine wesentlich größere Wärmemenge übertragen werden kann, ohne dass dazu das Temperaturniveau erhöht werden muss. Aufgrund der parallelen Ausrichtung der Wärmeleiter können diese zueinander berührungslos angeordnet werden, so dass die Wärme der Wärmeleiter zwangsläufig ausschließlich auf die Heißleimmasse und nicht zwischen den Wärmeleitern übertragen wird.

Weiter wird vorgeschlagen, dass die Heizeinrichtung einen zentralen beheizten Abschnitt aufweist, von dem eine Mehrzahl von Wärmeleitern abragen. Der zentrale Abschnitt kann durch eine entsprechend große Bemessung einfacher beheizt werden, während die eigentliche Wärmeübertragung auf den Heißleim dann über die nicht aktiv beheizten Wärmeleiter erfolgt. Der zentrale Abschnitt sollte aus einem besonders wärmeleitfähigen Material, wie z.B. Aluminium hergestellt werden, damit der zentrale Abschnitt trotz seiner größeren Bemessung möglichst schnell und gleichmäßig aufgeheizt wird. Die Wärmeleiter selbst werden nicht aktiv beheizt und dienen nur der großflächigen Weiterleitung der Wärme, so dass sie aus sehr dünnem Material mit einer großen Oberfläche und guten Wärme leitenden Eigenschaften ausgebildet sind.

Konstruktiv kann die vorgeschlagene Lösung besonders einfach umgesetzt werden, indem der zentrale Abschnitt durch eine Wärme leitende Grundplatte gebildet ist, von der die Wärmeleiter abragen. Die Grundplatte kann als massives Bauteil ausgeführt werden, in die entsprechende Schlitze oder Öffnungen, z.B. mittels eines Lasers oder Wasserstrahls eingearbeitet werden, welche in der Formgebung dem Querschnitt der Wärmeleiter entsprechen, so dass die Wärmeleiter nur noch in die Öffnungen eingeführt und z.B. über einen Presssitz darin gehalten werden. In der Grundplatte sollten außerdem Ausnehmungen vorgesehen sein, welche einen Durchtritt der flüssigen Heißleimmasse durch die Grundplatte ermöglichen und dadurch verhindern, dass die Grundplatte die Heißleimmasse in zwei voneinander getrennte Bereiche aufteilt.

Eine besonders große Wärmemenge kann durch die Wärmeleiter übertragen werden, wenn sie durch Plattenelemente gebildet sind. Die Plattenelemente haben eine besonders große Oberfläche im Verhältnis zu ihrem Volumen und bilden daneben durch eine entsprechend dünne Bemessung scharfe Trennkanten aus, durch die der noch feste Heißleim in kleinere Teile geschnitten werden kann bzw. durch die die Scherkräfte besonders wirkungsvoll in den Heißleim eingeleitet werden. Ferner kann die zweite Heizeinrichtung dadurch nach einer bestimmten Aufheizphase in einem erkalteten Heißleimblock frühzeitiger bewegt werden, indem die Plattenelemente den Block messerartig durchschneiden.

Weiter wird vorgeschlagen, dass die Wärmeleiter in konzentrischen Ringen angeordnet sind. Durch die Anordnung der Wärmeleiter in konzentrischen Ringen kann die Oberfläche weiter vergrößert werden, wobei die vorgeschlagene Anordnung besonders günstig bei einer Rotationsbewegung der zweiten Heizeinrichtung ist, sofern die Ringe auch konzentrisch zu der Rotationsachse der zweiten Heizeinrichtung ausgerichtet sind. Ferner kann die zweite Heizeinrichtung dadurch besonders frühzeitig in einem erkalteten Heißleimblock bewegt werden, da die der Heißleimmasse bei der Bewegung ausgesetzten Stirnflächen der Wärmeleiter eine besonders geringe Fläche aufweisen, so dass zur Bewegung der Wärmeleiter und entsprechend schmale ringförmige Spalte in der Heißleimmasse aufgeschmolzen werden, um die Bewegung der Heizeinrichtung zu ermöglichen. Aufgrund der Kanten der Wärmeleiter und der vorgeschlagenen Bewegung der zweiten Heizeinrichtung haben diese während der Bewegung außerdem einen Schneideffekt in der Heißleimmasse, die Heizvorrichtung schmilzt sich dadurch praktisch die für die Bewegung erforderlichen Ringspalte selbsttätig auf.

Ferner wird vorgeschlagen, dass eine Fördereinrichtung vorgesehen ist, mittels derer der Heißleim aus einem Vorratsspeicher kontinuierlich zuführbar ist. Durch die vorgesehene Fördereinrichtung kann der durch die weiterentwickelte Heißleimschmelzvorrichtung gewonnene Vorteil in dem verbesserten Aufschmelzvorgang dadurch genutzt werden, indem der Heißleimschmelzbehälter in der Heißleimschmelzvorrichtung kleiner bemessen wird, und das Granulat, statt in einem einmaligen Auffüllvorgang mit einer großen Menge, kontinuierlich in einem geringen Mengenstrom zugeführt wird. Der kleinere Heißleimschmelzbehälter kann aufgrund der darin befindlichen geringeren Menge an Granulat im Umkehrschluss zu einem noch schnelleren Aufschmelzen des Heißleims genutzt werden. Ferner können durch den kleineren Heißleimschmelzbehälter Kosten und Bauraum gespart werden.

Prozesstechnisch hat sich für die zu fördernde Menge an festen Heißleimteilchen eine Schüttelrinne als sinnvoll herausgestellt, mit der ein sehr geringer Mengenstrom an Heißleimgranulat über einen längeren Zeitraum kontinuierlich bei einer für die Verhältnisse ausreichend genauen Dosierung gefördert werden kann. Die Schüttelrinne vereint damit sowohl die Funktion der Fördereinrichtung als auch die Funktion der Dosiereinrichtung in sich. Ferner hat sich herausgestellt, dass das Granulat des Heißleims schon bei geringen Temperaturerhöhungen und bei geringem Druck dazu neigt, an den Oberflächen zusammenzuschmelzen, so dass sich sehr leicht größere Brocken aneinanderhaftender Granulatteilchen bilden können, welche für die Dosierung von Nachteil sind. Diese aneinanderhaftenden Granulatteilchen können durch die Schwingbewegung der Schüttelrinne voneinander getrennt werden, wodurch das Dosieren des Heißleimgranulats weiter verbessert werden kann.

Weiter wird vorgeschlagen, dass an dem Heißleimschmelzbehälter und/oder an der Heizeinrichtung schräge Anlaufflächen vorgesehen sind, mittels derer an der Oberfläche der Heißleimmasse vorstehende, nicht aufgeschmolzene Heißleimteile in die aufgeschmolzene Heißleimmasse eindrückbar sind. Da die flüssige Heißleimmasse grundsätzlich eine verhältnismäßig große Oberflächenspannung aufweist, neigen die Granulatteilchen dazu, trotz ihrer höheren Dichte an der Oberfläche zu schwimmen. Ferner können die Granulatteilchen durch aneinander Anhaften an den Oberflächen Hohlräume zwischen sich einschließen, welche einen Auftrieb erzeugen, so dass der Verbund der Granulatteilchen trotz der größeren Dichte insgesamt schwimmt. Dieser Nachteil kann durch das Eindrücken der Heißleimteile aktiv verbessert werden, wobei durch die Ausrichtung der Anlaufflächen die Relativbewegung zwischen den Anlaufflächen und den Granulatteilchen gleich zum Eindrücken der Granulatteilchen in die Heißleimschmelze genutzt wird. Die schräggerichteten Anlaufflächen können dabei sowohl an der Heizeinrichtung als auch an dem Heißleimschmelzbehälter angeordnet sein. Insgesamt kann die Temperaturverteilung in der Heißleimmasse durch das Eindrücken der Granulatteilchen vergleichmäßigt werden, wobei die festen Heißleimteile durch das Eintauchen und das Benetzen mit dem flüssigen Heißleim außerdem beschleunigt aufschmelzen, wodurch der Aufschmelzvorgang selbst weiter verkürzt werden kann. Da die festen Heißleimteile eine größere Dichte (0,95 g/qcm) als der flüssige Heißleim (0,85-0,90 g/qcm) aufweisen, sinken die Heißleimteile nach dem Eindrücken selbsttätig zu Boden und schmelzen dort schließlich vollständig auf.

Die Erfindung wird im Folgenden anhand einer bevorzugten Ausführungsform unter Bezugnahme auf die beigefügten Figuren erläutert. Dabei zeigt:
- Fig. 1:: Heißleimschmelzvorrichtung mit Vorratsspeicher in Schnittdarstellung;
- Fig. 2:: Heißleimschmelzvorrichtung in Schnittdarstellung;
- Fig. 3:: Heißleimschmelzvorrichtung aus Figur 2 in Schnittrichtung A-A.

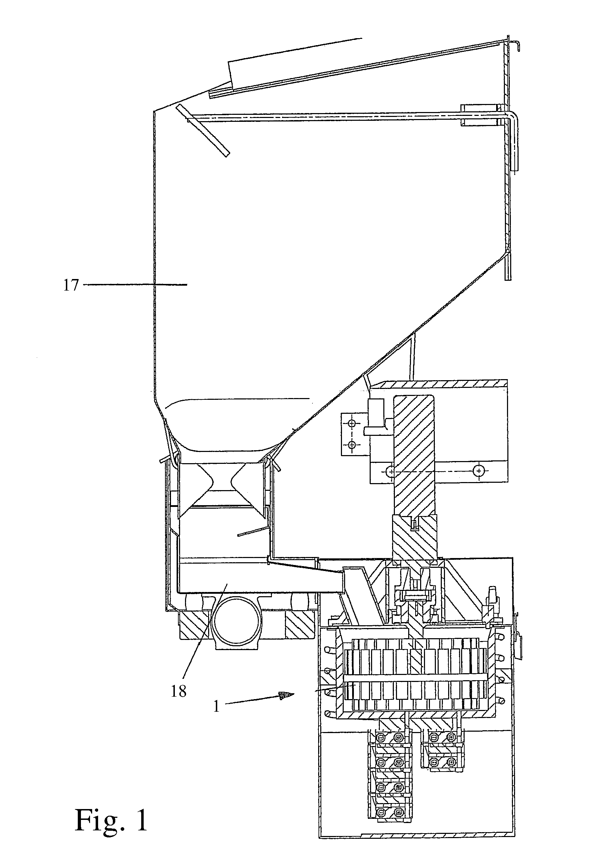

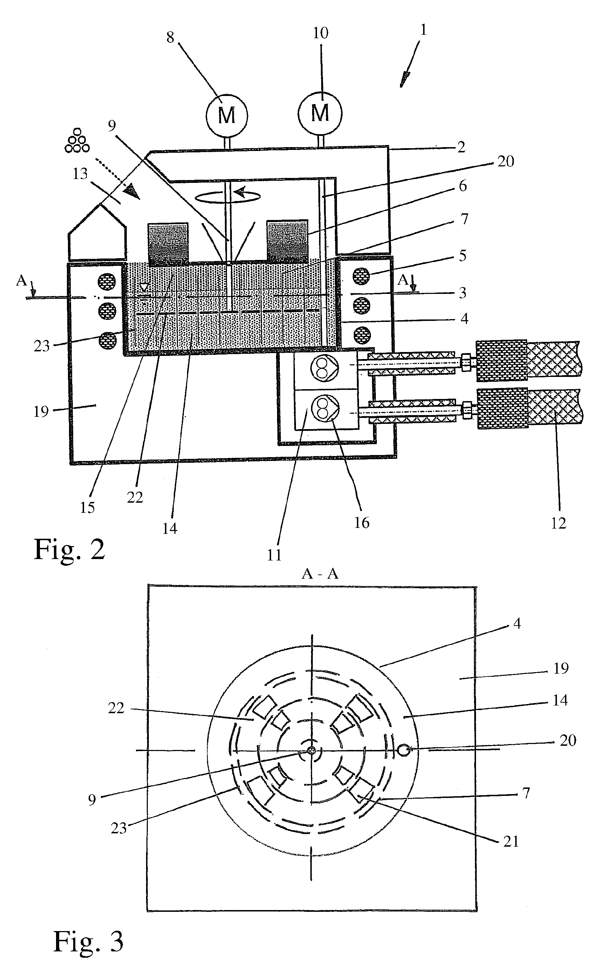

In der Figur 1 ist eine Einrichtung mit einem Vorratsspeicher 17, einer Fördereinrichtung 18 und einer Heißleimschmelzvorrichtung 1 zu erkennen. Der Vorratsspeicher 17 weist ein Volumen von ca. 70 l auf und dient zur Aufnahme von Heißleim in Form von festem Granulat. Das Granulat wird an der Unterseite des Vorratsspeichers 17 auf die Fördereinrichtung 18 aufgegeben, welche als Schüttelrinne ausgebildet ist. Die Schüttelrinne ist mit einem geringen Gefälle versehen und mittels einer nicht dargestellten Antriebseinrichtung zu einer Schwingbewegung antreibbar, so dass die auf der Schüttelrinne befindlichen Granulatteilchen des Heißleims kontinuierlich und dosiert der Heißleimschmelzvorrichtung zuführbar sind. Der Mengenstrom an zugeführten Granulatteilchen kann durch die Frequenz und die Amplitude der Schwingbewegung der Schüttelrinne ausgelegt werden. Die Schwingbewegung der Schüttelrinne bewirkt neben dem Transport der Granulatteilchen außerdem, dass aneinander anhaftende Granulatteilchen voneinander getrennt werden und dadurch möglichst einzeln in einen in der Figur 2 zu erkennenden Heißleimschmelzbehälter 4 der Heißleimschmelzvorrichtung 1 zugeführt werden.

In der Figur 2 ist die erfindungsgemäße Heißleimschmelzvorrichtung 1 mit einem topfförmigen Heißleimschmelzbehälter 4 und einer außen an der Wandung des Heißleimschmelzbehälters 4 angeordneten ersten Heizeinrichtung 5 zu erkennen. Die erste Heizeinrichtung 5 ist als Induktionsheizeinrichtung mit mehreren, den Heißleimschmelzbehälter 4 umfassenden Wicklungen aus elektrischen Leitern ausgebildet und außen an der Wandung in einer Isolationsschicht des Heißleimschmelzbehälters 4 oder alternativ bei einer entsprechenden Dicke der Wandung auch in der Wandung des Heißleimschmelzbehälters 4 angeordnet. Ferner ist erfindungsgemäß eine in den Heißleimschmelzbehälter 4 hineinragende, zweite Heizeinrichtung 7 vorgesehen, welche mittels einer Antriebseinrichtung 8 über eine Antriebswelle 9 zu einer rotatorischen Bewegung antreibbar ist.

Der Heißleimschmelzbehälter 4 ist an der Oberseite mit einer Trägereinheit 2 versehen, welche die Antriebseinrichtung 8 und die Antriebswelle 9 trägt. In der Trägereinheit 2 ist eine Einfüllöffnung 13 vorgesehen, durch die der Heißleimgrundwerkstoff in Form von Granulat als Schüttgut über die Fördereinrichtung 18 dosiert einfüllbar ist. Beim Aufschmelzen des Heißleimgranulats bildet sich in dem Heißleimschmelzbehälter 4 eine untere flüssige Heißleimphase 14, welche nach oben hin durch eine Schicht 15 von teilweise aufgeschmolzenem und noch nicht aufgeschmolzenem Heißleimgranulat abgedeckt ist. An der Unterseite des Heißleimschmelzbehälters 4 ist eine Fördereinrichtung 11 mit mehreren Pumpen 16 und beheizten Schläuchen 12 vorgesehen, über die der flüssige Heißleim kontinuierlich abgeführt und einer nicht dargestellten Auftragseinrichtung zugeführt wird. Die Auftragseinrichtung ist Teil einer Anlage, in der der Heißleim auf das Filterpapier der herzustellenden Produkte aufgetragen wird. Die Anlage kann z.B. eine Ein- oder Mehrstranganlage sein, in der die Filter mittels des Filterpapiers fixiert und als Standardfilter oder Multifilter an die Tabakstöcke angesetzt werden.

Die Pumpen 16 sind über einen Servomotor 10 antreibbar, dessen Welle 20 durch die Heißleimmasse 14 zu den Pumpen 16 hindurchgeführt ist. Damit muss die Welle 20 nicht gesondert abgedichtet werden. Außerdem kann die Welle 20 zusätzlich mit einer außenseitigen Spiralkontur versehen werden, so dass sie während der Drehbewegung gleichzeitig eine Umwälzung der Heißleimmasse zwischen der Heißleimphase 14 und der Schicht 15 bewirkt. Ferner sind an der zweiten Heizeinrichtung 7 Abstreifbleche 6 mit schräggerichteten Anlaufflächen vorgesehen, welche die noch nicht aufgeschmolzenen festen Granulatteilchen der Schicht 15 in die flüssige Heißleimphase 14 eindrücken. Die Abstreifbleche 6 können auch an dem Heißleimschmelzbehälter 4 feststehend angeordnet sein, wichtig ist nur, dass die Granulatteilchen des Heißleims eine Relativbewegung zu den Abstreifblechen 6 ausführen, während der sie an den schräggerichteten Anlaufflächen zur Anlage gelangen und im weiteren Verlauf durch die Ausrichtung der Anlaufflächen in die Heißleimphase 14 eingedrückt werden.

In der Figur 3 ist die zweite Heizeinrichtung 7 in Schnittrichtung A-A zu erkennen. Die zweite Heizeinrichtung 7 weist einen drehfest mit der Antriebswelle 9 verbundenen zentralen Abschnitt 22 in Form einer Grundplatte auf, welche aktiv beheizt wird. An der Grundplatte ist ferner eine Vielzahl von Wärmeleitern 23 vorgesehen, die parallel in konzentrischen Ringen zueinander angeordnet sind. Ferner sind in der Grundplatte mehrere Ausnehmungen 21 vorgesehen, welche einen Durchtritt der Heißleimmasse von der Unterseite der Grundplatte an die Oberseite und umgekehrt ermöglichen. Sofern die erste Heizeinrichtung 5 als Induktionsheizeinrichtung ausgebildet ist, und die zweite Heizeinrichtung 7 bzw. die Wärmeleiter 23 selbst magnetisch sind oder mit einer magnetischen Oberflächenbeschichtung versehen sind, können diese durch die Bewegung innerhalb des durch die Induktionsheizeinrichtung erzeugten Magnetfeldes ebenfalls induktiv aufgeheizt werden, so dass die zweite erfindungsgemäß ausgebildete Heizeinrichtung 7 nicht aktiv beheizt werden muss, sondern durch die Induktion nur als Wärmequelle für den Heißleim dient. In diesem Fall wirkt der äußere Ring der Wärmeleiter 23 als Faradayscher Käfig, so dass die innerhalb des äußeren Ringes befindlichen Wärmeleiter 23 elektromagnetisch abgeschirmt und folglich nicht induktiv erwärmt werden. Alternativ können die Wärmeleiter 23 des äußeren Ringes auch beabstandet und/oder versetzt zueinander und/oder schmaler bemessen werden, so dass die innerhalb des äußeren Ringes befindlichen Wärmeleiter 23 auch induktiv erwärmt werden.

Die Wärmeleiter 23 sind als Plattenelemente ausgebildet und bilden eine Gitterstruktur mit einer im Verhältnis zu ihrem Volumen sehr großen Oberfläche und sind selbst nicht aktiv beheizt. Die Wärmeleiter 23 sind selbst aus einem Wärme leitenden Werkstoff hergestellt und dienen dazu, die Wärme von der beheizten Grundplatte abzuführen und in die Heißleimmasse einzuleiten.

Aufgrund der Ausbildung der Wärmeleiter 23 als Plattenelemente und deren konzentrischer Anordnung, üben die Wärmeleiter 23 bei einer Drehbewegung über die dünnen Kanten Scherkräfte auf die Heißleimmasse aus, wodurch die Fließfähigkeit der Heißleimmasse verbessert und das Aufschmelzen begünstigt wird.

Sofern die Heißleimmasse aus einem festen, erstarrten Klumpen aus einem vorangegangenen Verarbeitungsprozess besteht, kann diese besonders einfach dadurch aufgeschmolzen werden, indem die zweite Heizeinrichtung 7 zunächst im Stillstand kurzzeitig erhitzt wird, so dass der daran anhaftende Heißleim aufschmilzt. Anschließend kann die zweite Heizeinrichtung 7 durch kurze Drehbewegungen mit wechselnder Drehrichtung losgerüttelt werden, bis sie in der Heißleimmasse frei drehbar ist. Dabei ist die Ausbildung der Wärmeleiter 23 als konzentrisch angeordnete Plattenelemente wiederum von Vorteil, so dass sich die Wärmeleiter 23 mit der einsetzenden Drehbewegung mit den Kanten quasi in die Heißleimmasse einschneiden. Dabei kann die Lösebewegung der zweiten Heizeinrichtung 7 mit der periodischen Drehrichtungsumkehr sehr einfach mittels einer drehmomentabhängigen Steuerung der Antriebseinrichtung 8 bewirkt werden.

Die Erfindung wurde anhand eines Ausführungsbeispiels mit zwei Heizeinrichtungen 5 und 7 beschrieben. Denkbar ist jedoch auch die Verwendung von nur einer in den Heißleimschmelzbehälter 4 ragenden Heizeinrichtung 7. Die Heizeinrichtung 7 kann insgesamt als Einheit von der Antriebseinrichtung 8 angetrieben werden. Alternativ wäre es auch denkbar, nur ein Funktionselement, z.B. den zentralen Abschnitt 22 mit den Wärmeleitern 23 anzutreiben, und die übrigen Bestandteile der Heizeinrichtung 7 feststehend auszubilden. Wichtig ist nur, dass der die Wärme auf den Heißleim übertragende Abschnitt der Heizeinrichtung 7 bewegt wird.

## Patentansprüche

1. Heißleimschmelzvorrichtung (1) mit
- einem Heißleimschmelzbehälter (4) zur Aufnahme von Heißleim, welcher zur Verklebung von Filterpapier in Produkten der Tabak verarbeitenden Industrie, insbesondere in Filtern, vorgesehen ist, und
- einer den Heißleim in dem Heißleimschmelzbehälter (4) erhitzenden Heizeinrichtung (7),
**dadurch gekennzeichnet, dass**
- die Heizeinrichtung (7) in den Heißleimschmelzbehälter (4) hineinragt, und
- die Heizeinrichtung (7) selbst oder ein Funktionselement der Heizeinrichtung (7) mittels einer Antriebseinrichtung (8) zu einer den Heißleim durchmischenden Bewegung antreibbar ist.

2. Heißleimschmelzvorrichtung (1) nach Anspruch 1, **dadurch gekennzeichnet, dass**
- die Bewegung eine Rotationsbewegung ist.

3. Heißleimschmelzvorrichtung (1) nach einem der vorangegangenen Ansprüche, **dadurch gekennzeichnet, dass**
- die Heizeinrichtung (7) in dem in den Heißleimschmelzbehälter (4) ragenden Abschnitt eine gitterartige Struktur aufweist.

4. Heißleimschmelzvorrichtung (1) nach Anspruch 2 oder 3, **dadurch gekennzeichnet, dass**
- die gitterartige Struktur durch eine Mehrzahl von parallel ausgerichteten Wärmeleitern (23) gebildet ist.

5. Heißleimschmelzvorrichtung (1) nach einem der vorangegangenen Ansprüche, **dadurch gekennzeichnet, dass**
- die Heizeinrichtung (7) einen zentralen beheizten Abschnitt (22) aufweist, von dem eine Mehrzahl von Wärmeleitern (23) abragen.

6. Heißleimschmelzvorrichtung (1) nach Anspruch 5, **dadurch gekennzeichnet, dass**
- der zentrale Abschnitt (22) durch eine Wärme leitende Grundplatte gebildet ist, von der die Wärmeleiter (23) abragen.

7. Heißleimschmelzvorrichtung (1) nach einem der Ansprüche 4 bis 6, **dadurch gekennzeichnet, dass**
- die Wärmeleiter (23) durch Plattenelemente gebildet sind.

8. Heißleimschmelzvorrichtung (1) nach einem der Ansprüche 4 bis 7, **dadurch gekennzeichnet, dass**
- die Wärmeleiter (23) in konzentrischen Ringen angeordnet sind.

9. Heißleimschmelzvorrichtung (1) nach einem der vorangegangenen Ansprüche, **dadurch gekennzeichnet, dass**
- eine Fördereinrichtung (18) vorgesehen ist, mittels derer der Heißleim dem Heißleimschmelzbehälter (4) aus einem Vorratsspeicher (17) kontinuierlich zuführbar ist.

10. Heißleimschmelzvorrichtung (1) nach Anspruch 9, **dadurch gekennzeichnet, dass**
- die Fördereinrichtung (18) durch eine Schüttelrinne gebildet ist.

11. Heißleimschmelzvorrichtung (1) nach einem der vorangegangenen Ansprüche, **dadurch gekennzeichnet, dass**
- die Heizeinrichtung (7) wenigstens abschnittsweise eine magnetische Oberflächenbeschichtung aufweist.

12. Heißleimschmelzvorrichtung (1) nach einem der vorangegangenen Ansprüche, **dadurch gekennzeichnet, dass**
- an dem Heißleimschmelzbehälter (4) und/oder an der Heizeinrichtung (7) schräge Anlaufflächen vorgesehen sind, mittels derer an der Oberfläche der Heißleimmasse vorstehende, nicht aufgeschmolzene Heißleimteile in die aufgeschmolzene Heißleimmasse eindrückbar sind.
